# EUROPÄISCHE PATENTSCHRIFT

(11) **EP 1 704 925 B1**
(45) Veröffentlichungstag und Bekanntmachung des Hinweises auf die Patenterteilung: **05.05.2010**
(21) Anmeldenummer: 06005515.9
(22) Anmeldetag: 17.03.2006
(51) Int. Cl.: B05B 15/12

(54) **Vorrichtung zum Abtrennen von Nasslack-Overspray**
Apparatus for separating liquid paint overspray
Dispositif de séparation de l'excédent de peinture liquide

(30) Priorität: 24.03.2005 DE 102005013709
(43) Veröffentlichungstag der Anmeldung: 27.09.2006
(73) Patentinhaber: Dürr Systems GmbH, 74321 Bietigheim-Bissingen (DE)
(72) Erfinder: Wieland, Dietmar, 70180 Stuttgart (DE); Tobisch, Wolfgang, 70193 Stuttgart (DE); Rundel, Klaus, 73728 Esslingen (DE); Rajtschan, Alexander, 70469 Stuttgart (DE)
(74) Vertreter: Hoeger, Stellrecht & Partner Patentanwälte

(56) Entgegenhaltungen:
- EP-A- 1 462 182
- US-B1- 6 226 568

## Beschreibung

Die vorliegende Erfindung betrifft eine Vorrichtung zum Abtrennen von Nasslack-Overspray aus einem Overspray-Partikel enthaltenden Abluftstrom, wobei die Overspray-Partikel in einem Applikationsbereich einer Lackleranlage in den Abluftstrom gelangen.

Solche Vorrichtungen werden in Anlagen zum Lackieren von Werkstücken, insbesondere zum Spritzlackieren von Fahrzeugkarosserien, eingesetzt, in denen ein Luftstrom durch einen Applikationsbereich der Anlage erzeugt wird, welcher überschüssigen Nasslack aus dem Applikationsbereich abführt.

Es ist bekannt, den mitgeführten Nasslack-Overspray in einer Auswaschungsanlage mittels einer Waschflüssigkeit aus dem Abluftstrom abzuscheiden.

Die bekannten Auswaschungsanlagen haben jedoch insbesondere bei Umluftführung den Nachteil, dass dem Abluftstrom, aus dem der Nasslack-Overspray abgeschieden wird, eine hohe Feuchtigkeitsmenge zugeführt wird, so dass der Abluftstrom nach erfolgter Abscheidung des Nasslack-Oversprays einer energieintensiven Entfeuchtung unterzogen werden muss.

Ferner ist für die Aufbereitung der mit dem Nasslack-Overspray beladenen Waschflüssigkeit ein großer Aufwand erforderlich.

Die US-B1-6 226 568 offenbart eine Vorrichtung zum Abtrennen von Nasslack-Overspray aus einem Overspray-Partikel enthaltenden Abluftstrom, wobei die Overspray-Partikel in einem Applikationsbereich einer Lackieranlage in den Abluftstrom gelangen und in einer unter dem Applikationsbereich angeordneten Auswaschungsanlage mittels einer Waschflüssigkeit aus dem Abluftstrom abgeschieden werden.

Die EP-A-1 462 182 offenbart eine Vorrichtung zum Abtrennen von Nasslack-Overspray aus einem Overspray-Partikel enthaltenden Abluftstrom nach dem Oberbegriff von Anspruch 1.

Der vorliegenden Erfindung liegt die Aufgabe zugrunde, eine Vorrichtung der eingangs genannten Art zu schaffen, welche eine Abtrennung des Nasslack-Oversprays aus dem Abluftstrom in einfacher, zuverlässiger und energiesparender Weise ermöglicht.

Diese Aufgabe wird durch eine Vorrichtung nach Anspruch 1 gelöst.

Unter einem regenerierbaren Oberflächenfilter ist dabei ein Filter zu verstehen, das eine Filteroberfläche aufweist, an welcher der vom Abluftstrom mitgeführte Nasslack-Overspray abgeschieden wird, und das, vorzugsweise im laufenden Betrieb der Vorrichtung, von dem darauf abgeschiedenen Lack-Overspray reinigbar ist.

Ein solches regenerierbares Oberflächenfilter ist eine "trockene" Abtrennvorrichtung, in welcher keine Flüssigkeit zum Auswaschen der Overspray-Partikel aus dem Abluftstrom verwendet wird, sondern Filterelemente zum Abtrennen der Overspray-Partikel aus dem Luftstrom verwendet werden.

Dabei kann die Abreinigung des regenerierbaren Oberflächenfilters mittels einer "trockenen" Abreinigungsvorrichtung, d.h. ohne Verwendung einer Reinigungsflüssigkeit, oder mittels einer "nassen" Abreinigungsvorrichtung, d.h. unter Verwendung einer Reinigungsflüssigkeit, erfolgen.

Eine "trockene" Abtrennvorrichtung kann auch mit einer "nassen" Abreinigungsvorrichtung versehen sein, solange nur die Abscheidung der Overspray-Partikel an dem regenerierbaren Abtrennelement auf trockene Weise, d.h. ohne Auswaschung mittels einer Auswaschflüssigkeit, erfolgt.

Bei der erfindungsgemäßen Vorrichtung erfolgt die gesamte Abtrennung von Nasslack-Overspray aus dem Overspray-Partikel enthaltenden Abluftstrom vollständig trocken, das heißt ohne Verwendung einer Flüssigkeit zum Auswaschen der Overspray-Partikel aus dem Abluftstrom.

Durch die Verwendung eines regenerierbaren Oberflächenfilters in der Abtrennvorrichtung entfällt die Notwendigkeit, eine Auswaschungsanlage und die zugehörige Wasseraufbereitung vorzusehen. Hierdurch werden der Energieverbrauch der Abtrennvorrichtung und (durch den Wegfall der Wasseraufbereitung) auch der Platzbedarf der Vorrichtung deutlich reduziert.

Die Abreinigbarkeit des Oberflächenfilters gewährleistet ferner eine lange Standzeit des Filters auch bei großen Mengen an anfallendem Nasslack-Overspray.

Durch das Vorsehen eines verengten Bereichs im Strömungsweg des Abluftstroms von dem Applikationsbereich zu der Abtrennvorrichtung wird ferner erreicht, dass das regenerierbare Oberflächenfilter vor direkten Einwirkungen aus dem Applikationsbereich geschützt ist.

Dadurch, dass die mittlere Strömungsrichtung des Abluftstroms beim Passieren des verengten Bereichs quer zur Vertikalen ausgerichtet ist und somit der Abluftstrom am verengten Bereich aus seiner ursprünglichen Strömungsrichtung umgelenkt wird, wird erreicht, dass der Abluftstrom beim Passieren des verengten Bereiches besonders stark verwirbelt, und verhindert, dass Gegenstände oder Schmutz aus dem Applikationsbereich in direkter Fallinie zu dem mindestens einen regenerierbaren Oberflächenfilter gelangen können.

Insbesondere kann vorgesehen sein, dass die mittlere Strömungsrichtung des Abluftstroms beim Passieren des verengten Bereiches im wesentlichen horizontal ausgerichtet ist.

Bei einer bevorzugten Ausgestaltung der erfindungsgemäßen Vorrichtung ist vorgesehen, dass der Abluftkanal zumindest teilweise unterhalb des verengten Bereiches angeordnet ist.

Um günstige Strömungsverhältnisse im Strömungsweg des Abluftstroms zu erzielen, ist es günstig, dass die Vorrichtung Strömungsleitelemente mit jeweils einer Strömungsleitfläche umfasst, die zumindest einen Teil des Abluftstroms zu dem verengten Bereich hin leitet.

Ein besonders einfacher Aufbau der erfindungsgemäßen Vorrichtung wird erzielt, wenn mindestens eine Strömungsleitfläche an einem Abluftkanal angeordnet ist, in welchen zumindest ein Teil des Abluftstroms nach dem Passieren der Abtrennvorrichtung eintritt.

Die Strömungsleitfläche kann zumindest abschnittsweise im Wesentlichen horizontal ausgerichtet sein.

Alternativ hierzu kann auch vorgesehen sein, dass die Strömungsleitfläche zumindest abschnittsweise gegen die Horizontale, vorzugsweise zu dem verengten Bereich hin, geneigt ist. Durch eine solche Neigung der Strömungsleitfläche wird eine besonders wirksame Führung der Abluftströmung zu dem verengten Bereich hin erzielt.

Bei einer bevorzugten Ausgestaltung der erfindungsgemäßen Vorrichtung ist vorgesehen, dass der verengte Bereich unterhalb des Applikationsbereichs angeordnet ist.

Wenn der Applikationsbereich in einer Lackierkabine angeordnet ist, so ist der verengte Bereich vorzugsweise innerhalb einer vertikalen Projektion der Grundfläche der Lackierkabine angeordnet.

Um zu vermeiden, dass sich Nasslack-Overspray aus dem Abluftstrom bereits an den Begrenzungswänden des verengten Bereichs niederschlägt, ist es von Vorteil, wenn die Ausdehnung des verengten Bereiches in der Strömungsrichtung des Abluftstroms kürzer ist als ungefähr 2 m, vorzugsweise kürzer ist als ungefähr 1 m, insbesondere kürzer ist als ungefähr 0,5 m.

Wenn der Applikationsbereich in einer Lackierkabine mit einer Längsrichtung angeordnet ist, so erstreckt sich der verengte Bereich vorzugsweise in der Längsrichtung der Lackierkabine über im wesentlichen die gesamte Länge der Lackierkabine.

Dabei kann der verengte Bereich in der Längsrichtung der Lackierkabine in mehrere verengte Teil-Bereiche unterteilt sein.

Alternativ hierzu kann auch vorgesehen sein, dass der verengte Bereich in der Längsrichtung der Lackierkabine nicht unterteilt ist.

Ferner kann vorgesehen sein, dass der verengte Bereich in vertikaler Richtung in mehrere verengte Teil-Bereiche unterteilt ist.

Alternativ hierzu kann auch vorgesehen sein, dass der verengte Bereich in der vertikalen Richtung nicht unterteilt ist.

Der Eintritt des Abluftstroms in den verengten Bereich ist vorzugsweise oberhalb des mindestens einen regenerierbaren Oberflächenfilters angeordnet.

Wenn der Applikationsbereich in einer Lackierkabine angeordnet ist, so beträgt der kleinste von dem Abluftstrom durchströmte Querschnitt des verengten Bereichs vorzugsweise höchstens ungefähr 20 % der Grundfläche der Lackierkabine.

Um das mindestens eine regenerierbare Oberflächenfilter vor Beschädigungen zu schützen, ist es günstig, wenn vertikal über dem mindestens einen regenerierbaren Oberflächenfilter mindestens ein Abschirmelement angeordnet ist, das ein senkrechtes Herabfallen von Gegenständen, Schmutz und/oder Lackpartikeln aus dem Applikationsbereich auf das regenerierbare Oberflächenfilter verhindert.

Dabei kann vorgesehen sein, dass das mindestens eine Abschirmelement eine Begrenzung des verengten Bereiches des Strömungswegs des Abluftstroms bildet.

Wenn die Vorrichtung mindestens einen Abluftkanal umfasst, in welchen zumindest ein Teil des Abluftstroms nach dem Passieren der Abtrennvorrichtung eintritt, so kann der Abluftkanal als Abschirmelement wirken, wenn er vertikal über der Abtrennvorrichtung angeordnet ist.

Wenn die Vorrichtung einen Boden aufweist, welcher den Strömungsweg des Abluftstroms nach unten hin begrenzt, so kann vorgesehen sein, dass zumindest ein Teil des Bodens von einem Abluftkanal abgedeckt ist, in welchen zumindest ein Teil des Abluftstroms nach dem Passieren der Abtrennvorrichtung eintritt. Auf diese Weise wird die Bodenfläche reduziert, welche durch vor Erreichen des mindestens einen Oberflächenfilters aus dem Abluftstrom abgetrennten Nasslack-Overspray verunreinigt wird.

Wenn der Applikationsbereich in einer Lackierkabine angeordnet ist, so wird ein besonders platzsparender Aufbau der Vorrichtung erzielt, wenn der Abluftkanal innerhalb einer vertikalen Projektion der Grundfläche der Lackierkabine angeordnet ist.

Um das Abreinigen des regenerierbaren Oberflächenfilters zu erleichtern, ist es günstig, wenn das mindestens eine regenerierbare Oberflächenfilter eine ein Precoat-Material umfassende Sperrschicht aufweist, welche ein Verkleben der Filteroberfläche verhindert.

Um die Sperrschicht aus Precoat-Material an dem Oberflächenfilter zu erzeugen, kann vorgesehen sein, dass die Vorrichtung mindestens eine Precoat-Zuführeinrichtung umfasst, welche ein Precoat-Material in den Abluftstrom abgibt.

Dabei kann die Abgabe von Precoat-Material in den Abluftstrom kontinuierlich oder intervallweise erfolgen.

Als Precoat-Materialien kommen beispielsweise Kalk, Aluminiumsilikate, Aluminiumoxide, Siliziumoxide, Pulverlack oder ähnliches in Betracht.

Grundsätzlich ist jedes Medium als Precoat-Material geeignet, das dazu in der Lage ist, den Flüssigkeitsanteil des Nasslack-Oversprays aufzunehmen.

Grundsätzlich kann die Precoat-Zuführeinrichtung beispielsweise unmittelbar vor dem mindestens einen regenerierbaren Oberflächenfilter angeordnet sein.

Ferner ist es möglich, die mindestens eine Precoat-Zuführeinrichtung im unmittelbaren Anschluss an den Applikationsbereich, beispielsweise im Bodenbereich der Lackierkabine, anzuordnen.

Besonders günstig ist es jedoch, wenn die mindestens eine Precoat-Zuführeinrichtung an dem verengten Bereich des Strömungswegs des Abluftstroms angeordnet ist. Im verengten Bereich des Strömungswegs des Abluftstroms herrschen besonders hohe Strömungsgeschwindigkeiten, so dass durch die Zuführung des Precoat-Materials an dieser Stelle eine besonders gute Precoat-Verteilung in dem Abluftstrom durch Venturi-Verwirbelung erzielt wird.

Beim Precoatieren besteht auch die Möglichkeit des Zwischen-Precoatierens, wobei ohne vorheriges Abreinigen des Oberflächenfilters neues Precoat-Material aufgebracht wird, um das spätere Abreinigungsverhalten des Oberflächenfilters zu verbessern.

Das mindestens eine regenerierbare Oberflächenfilter der Abtrennvorrichtung ist vorzugsweise intervallweise abreinigbar.

Alternativ oder ergänzend hierzu kann vorgesehen sein, dass das mindestens eine regenerierbare Oberflächenfilter im Betrieb der Vorrichtung eine feuchte Oberfläche aufweist.

Das Oberflächenfilter kann beispielsweise durch Spül- oder Befeuchtungsmedien wie VE-Wasser, Butylglykol oder andere Lösemittel feucht gehalten werden, um die Abreinigung des Oberflächenfilters zu erleichtern.

Diese Befeuchtungsmedien können an denselben Stellen in den Abluftstrom eingebracht werden wie die vorstehend erläuterten Precoat-Materialien.

Für eine gründliche Abreinigung der Filteroberfläche des Oberflächenfilters ist es günstig, wenn die Oberfläche des mindestens einen regenerierbaren Oberflächenfilters kontinuierlich oder intervallweise abspülbar ist.

Alternativ oder ergänzend hierzu kann vorgesehen sein, dass das mindestens eine regenerierbare Oberflächenfilter durch Druckluftimpulse abreinigbar ist.

Ein besonders energiesparender Betrieb der Lackieranlage wird ermöglicht, wenn die Vorrichtung einen Umluftkreislauf aufweist, in welchem der Abluftstrom, aus welchem der Nasslack-Overspray abgetrennt worden ist, zumindest teilweise erneut dem Applikationsbereich zugeführt wird.

Anspruch 32 ist auf eine Anlage zum Lackieren von Gegenständen, insbesondere von Fahrzeugkarosserien, gerichtet, welche mindestens eine Lackierkabine und mindestens eine erfindungsgemäße Vorrichtung zum Abtrennen von Nasslack-Overspray aus einem Overspray-Partikel enthaltenden Abluftstrom umfasst.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: einen schematischen vertikalen Querschnitt durch eine erste Ausführungsform einer Lackierkabine mit einer darunter angeordneten Vorrichtung zum Abtrennen von Nasslack-Overspray aus einem Overspray-Partikel enthaltenden Abluftstrom, welche einen vertikal unter dem Applikationsbereich angeordneten Abluftkanal und einen verengten Bereich im Strömungsweg des Abluftstroms von dem Applikationsbereich zu einer Abtrennvorrichtung für Nasslack-Overspray umfasst;
- Fig. 2: eine schematische Seitenansicht der Anlage aus Fig. 1;
- Fig. 3: eine schematische Draufsicht von oben auf die Anlage aus den Fig. 1 und 2;
- Fig. 4: eine schematische perspektivische Darstellung der Anlage aus den Fig. 1 bis 3;
- Fig. 5: eine schematische Darstellung eines Umluftkreislaufs der Anlage aus den Fig. 1 bis 4;
- Fig. 6: eine schematische perspektivische Darstellung eines regenerierbaren Oberflächenfilters der Anlage aus den Fig. 1 bis 5;
- Fig. 7: einen schematischen Längsschnitt durch das Oberflächenfilter aus Fig. 6, welcher einen Abreinigungsvorgang des Oberflächenfilters illustriert;
- Fig. 8: eine schematische perspektivische Darstellung einer alternativen Ausführungsform eines regenerierbaren Oberflächenfilters;
- Fig. 9: einen schematischen Querschnitt durch das Oberflächenfilter aus Fig. 8, welcher einen Abreinigungsvorgang des Oberflächenfilters illustriert;
- Fig. 10: eine schematische Draufsicht von oben auf das Oberflächenfilter aus den Fig. 8 und 9;
- Fig. 11: einen schematischen Querschnitt durch eine zweite Ausführungsform einer Lackierkabine mit einer darunter angeordneten Vorrichtung zum Abtrennen von Nasslack-Overspray aus einem Overspray-Partikel enthaltenden Abluftstrom, wobei die Abtrennvorrichtung Oberflächenfilter mit vertikal ausgerichteten Filterelementen umfasst;
- Fig. 12: eine schematische Seitenansicht der Anlage aus Fig. 11;
- Fig. 13: eine schematische Draufsicht von oben auf die Anlage aus den Fig. 11 und 12;
- Fig. 14: eine schematische perspektivische Darstellung der Anlage aus den Fig. 11 bis 13;
- Fig. 15: einen schematischen Querschnitt durch eine dritte Ausführungsform einer Lackierkabine mit einer darunter angeordneten Vorrichtung zum Abtrennen von Nasslack-Overspray aus einem Overspray-Partikel enthaltenden Abluftstrom, wobei zwischendem Applikationsbereich der Lackierkabine und der Abtrennvorrichtung ein verengter Bereich des Strömungswegs des Abluftstroms vorgesehen ist, welcher durch gegen die Horizontale geneigte Strömungsleitelemente begrenzt ist;
- Fig. 16: eine schematische Seitenansicht der Anlage aus Fig. 15; und
- Fig. 17: eine schematische perspektivische Darstellung der Anlage aus den Fig. 15 und 16.

Gleiche oder funktional äquivalente Elemente sind in allen Figuren mit denselben Bezugszeichen bezeichnet.

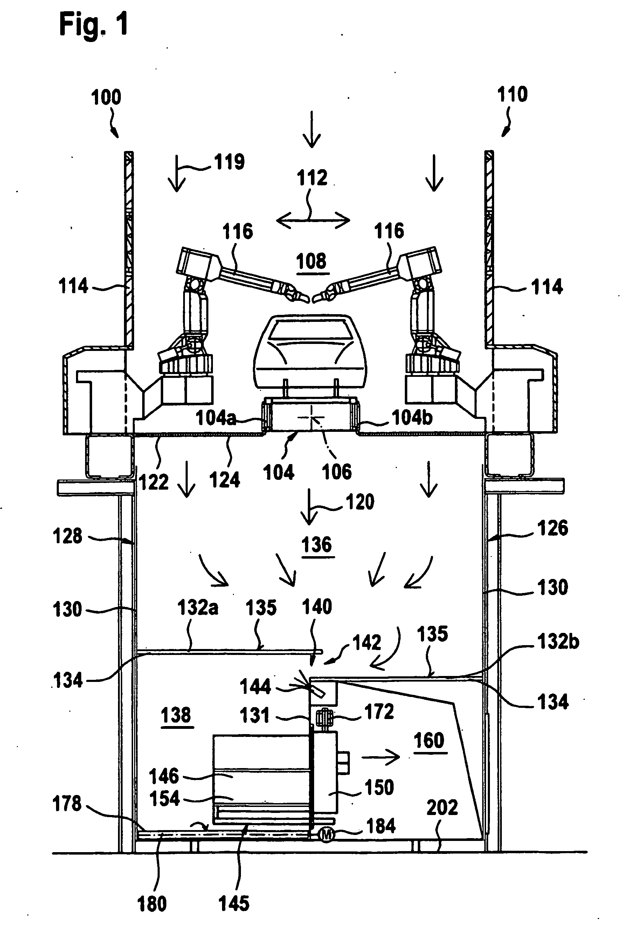

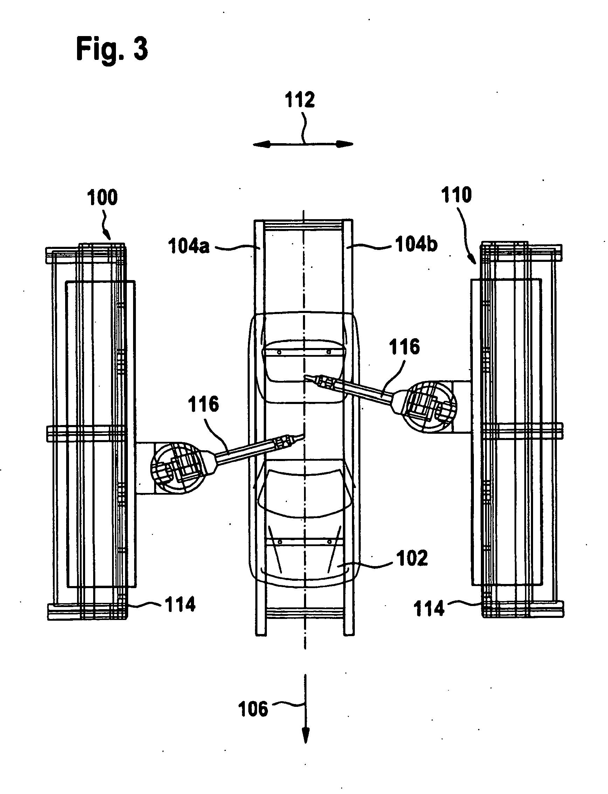

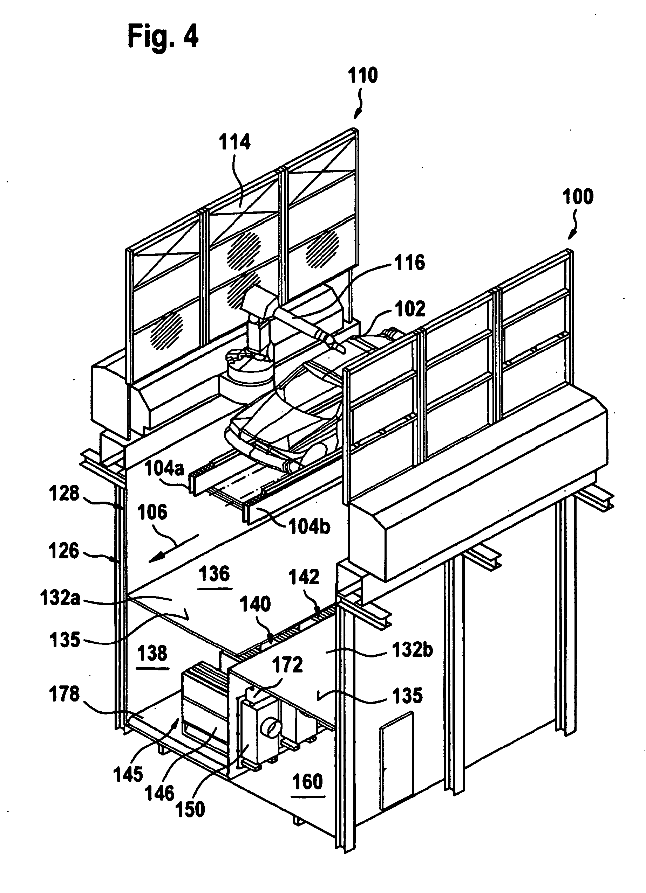

Eine in den Fig. 1 bis 7 dargestellte, als Ganzes mit 100 bezeichnete Anlage zum Spritzlackieren von Fahrzeugkarosserien 102 umfasst eine rein schematisch dargestellte Fördervorrichtung 104, mittels welcher die Fahrzeugkarosserien 102 längs einer Förderrichtung 106 durch einen Applikationsbereich 108 einer als Ganzes mit 110 bezeichneten Lackierkabine bewegt werden können.

Die Fördervorrichtung 104 kann beispielsweise als invertierter Kreisförderer oder auch als invertierter Einschienen-Förderer ausgebildet sein.

Insbesondere kann die Fördervorrichtung 104 zweiteilig ausgebildet sein und - wie am besten aus den Fig. 1, 3 und 4 zu ersehen ist - zwei sich parallel zur Förderrichtung 106 erstreckende Förderstränge 104a und 104b umfassen, welche in einer zur Förderrichtung 106 senkrechten horizontalen Richtung voneinander beabstandet sind.

Der Applikationsbereich 108 ist der Innenraum der Lackierkabine 110, welche in ihrer senkrecht zur Förderrichtung 106, die der Längsrichtung der Lackierkabine 110 entspricht, verlaufenden horizontalen Querrichtung 112 zu beiden Seiten der Fördervorrichtung 104 durch jeweils eine Kabinenwand 114 begrenzt ist.

Zu beiden Seiten der Fördervorrichtung 104 sind in der Lackierkabine 110 Spritzlackiereinrichtungen 116 (siehe Fig. 1 bis 4) angeordnet, beispielsweise in Form von Lackierrobotern.

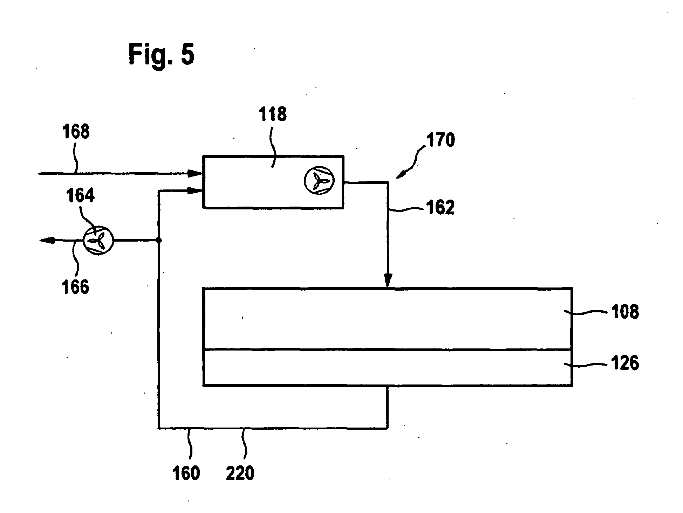

Mittels einer in Fig. 5 schematisch dargestellten Luftstromerzeugungseinrichtung 118 wird ein Luftstrom erzeugt, welcher den Applikationsbereich 108 im wesentlichen vertikal von oben nach unten durchsetzt, wie dies in Fig. 1 durch die Pfeile 119 angedeutet ist.

Dieser Luftstrom nimmt im Applikationsbereich 108 Lack-Overspray in Form von Overspray-Partikeln auf.

Der Begriff "Partikel" umfasst dabei sowohl feste als auch flüssige Teilchen, insbesondere Tröpfchen.

Wird in der Anlage 100 ein Nasslack zum Lackieren verwendet, so besteht der Nasslack-Overspray aus Lacktröpfchen.

Die meisten der Overspray-Partikel weisen eine größte Abmessung im Bereich von ungefähr 1 µm bis ungefähr 100 µm auf.

Der durch die Pfeile 120 dargestellte Abluftstrom verlässt die Lackierkabine 110 durch einen Kabinenboden 122, welcher durch luftdurchlässige Gitterroste 124 gebildet ist.

Die Anlage 100 umfasst ferner eine als Ganzes mit 126 bezeichnete Vorrichtung zum Abtrennen von Nasslack-Overspray aus dem Luftstrom 120, welche unterhalb des Applikationsbereichs 108 angeordnet ist.

Die Vorrichtung 126 umfasst eine im wesentlichen quaderförmige Strömungskammer 128, welche sich in der Förderrichtung 106 über die ganze Länge der Lackierkabine 110 hinweg erstreckt und in der Querrichtung 112 der Lackierkabine 110 durch vertikale Seitenwände 130 begrenzt ist, die im wesentlichen mit den seitlichen Kabinenwänden 114 der Lackierkabine 110 fluchten, so dass die Strömungskammer 128 im wesentlichen dieselbe horizontale Querschnittsfläche aufweist wie die Lackierkabine 110 und im wesentlichen vollständig innerhalb der vertikalen Projektion der Grundfläche der Lackierkabine 110 angeordnet ist.

Die Strömungskammer 128 ist durch Strömungsleitelemente 132a, 132b, welche in diesem Ausführungsbeispiel als im wesentlichen horizontal ausgerichtete Strömungsleitbleche 134 ausgebildet sind, in einen oberen Abschnitt 136 und einen unteren Abschnitt 138 unterteilt.

Der obere Abschnitt 136 und der untere Abschnitt 138 der Strömungskammer 128 sind durch einen verengten Bereich 140 miteinander verbunden, welcher die Form eines Spaltes 142 zwischen den einander gegenüberliegenden freien Rändern der Strömungsleitelemente 132a, 132b aufweist und eine Engstelle im Strömungsweg des Abluftstroms 120 durch die Strömungskammer 128 bildet.

Die Oberseiten der Strömungsleitelemente 132a, 132b bilden jeweils eine Strömungsleitfläche 135, welche den Abluftstrom 120 zu dem verengten Bereich 140 hin leitet.

Die freien Ränder der Strömungsleitelemente 132a, 132b sind in vertikaler Richtung gegeneinander um die Höhe des Spaltes 142 versetzt, so dass sich der Spalt 142 in vertikaler Richtung erstreckt und in im wesentlichen horizontaler Richtung von dem Abluftstrom 120 durchströmt wird.

Das Strömungsleitelement 132b bildet zugleich eine obere Begrenzungswand eines Abluftkanals 160, welcher sich nach unten bis auf die Höhe eines Bodens 202 der Strömungskammer 128 erstreckt, wodurch die Bodenfläche, welche von dem mit Nasslack-Overspray beladenen Abluftstrom 120 überstrichen wird und somit durch Nasslack-Overspray verunreinigt werden kann, verringert wird.

Der Abluftkanal 160 erstreckt sich in der Förderrichtung 106 über die ganze Länge der Lackierkabine 110 hinweg und ist im wesentlichen vollständig innerhalb der vertikalen Projektion der Grundfläche der Lackierkabine 110 angeordnet.

Am verengten Bereich 140 des Strömungsweges ist eine Precoat-Zuführeinrichtung 144 angeordnet, welche kontinuierlich oder intervallweise ein Precoat-Material in den Abluftstrom 120 abgibt.

Die Precoat-Zuführeinrichtung 144 kann beispielsweise als eine Precoat-Sprühdüse ausgebildet sein, welche das Precoat-Material in Form eines Sprühnebels in den Abluftstrom 120 abgibt.

Die Anordnung der Precoat-Zuführeinrichtung 144 an dem verengten Bereich 140 des Strömungswegs des Abluftstroms 120 bietet den Vorteil, dass dort aufgrund der erhöhten Strömungsgeschwindigkeit des Abluftstroms 120 und aufgrund des kleinen Durchtrittsquerschnittes Turbulenzen in der Abluftströmung entstehen, welche für eine Verwirbelung des Precoat-Materials in dem Abluftstrom 120 und somit für eine besonders gute Verteilung des Precoat-Materials in dem Abluftstrom 120 sorgen.

Die Precoat-Zuführeinrichtung 144 ist an eine (nicht dargestellte) Precoat-Zuführleitung angeschlossen, welche das Precoat-Material in fließfähigem Zustand mittels einer (nicht dargestellten) Precoat-Zuführpumpe aus einem (nicht dargestellten) Precoat-Speicherbehälter zuführt.

Als Precoat-Material kann grundsätzlich jedes Medium verwendet werden, welches dazu in der Lage ist, den Flüssigkeitsanteil des Nasslack-Oversprays aufzunehmen.

Insbesondere kommen als Precoat-Materialien beispielsweise Kalk, Aluminiumsilikate, Aluminiumoxide, Siliziumoxide, Pulverlack oder ähnliches in Betracht.

Um das Precoat-Material fließfähig und sprühbar zu machen, werden beispielsweise wäßrige Dispersionen der genannten Materialien verwendet.

Wenn die auf die Precoat-Zuführeinrichtung 144 folgenden Filter nicht precoated, sondern lediglich befeuchtet werden sollen, kann mittels der Precoat-Zuführeinrichtung 144 auch lediglich ein Befeuchtungsmedium in den Abluftstrom 120 eingebracht werden.

Als solche Befeuchtungsmedien kommen insbesondere beispielsweise VE-Wasser, Butylglykol oder andere Lösungsmittel in Betracht.

Im unteren Abschnitt 138 der Strömungskammer 128 ist eine Abtrennvorrichtung 145 zum Abtrennen von Nasslack-Overspray aus dem Abluftstrom 120 vorgesehen. Die Abtrennvorrichtung 145 umfasst mehrere, an einer dem unteren Abschnitt 138 der Strömungskammer 128 zugewandten vertikalen Seitenwand 131 des Abluftkanals 160 angeordnete, in der Förderrichtung 106 voneinander beabstandete regenerierbare Oberflächenfilter 146, welche mit ihren Filterelementen 154 in den unteren Abschnitt 138 der Strömungskammer 128 hineinragen (siehe insbesondere die Fig. 1, 2 und 4).

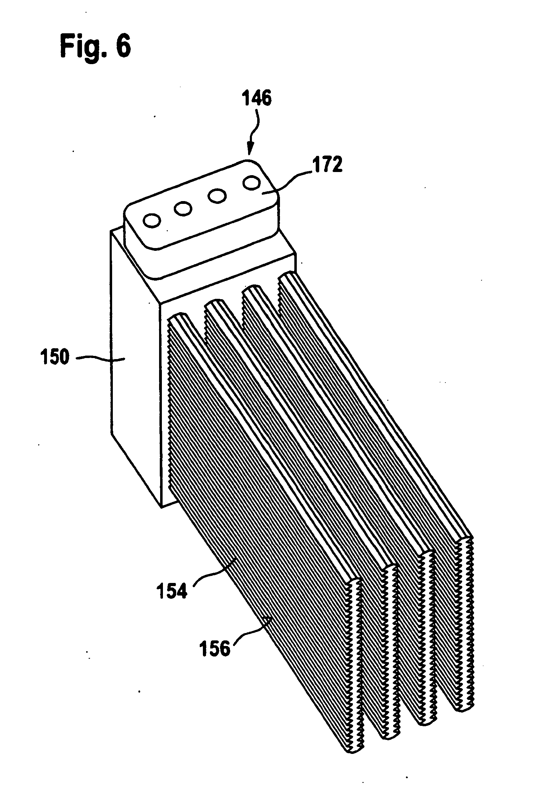

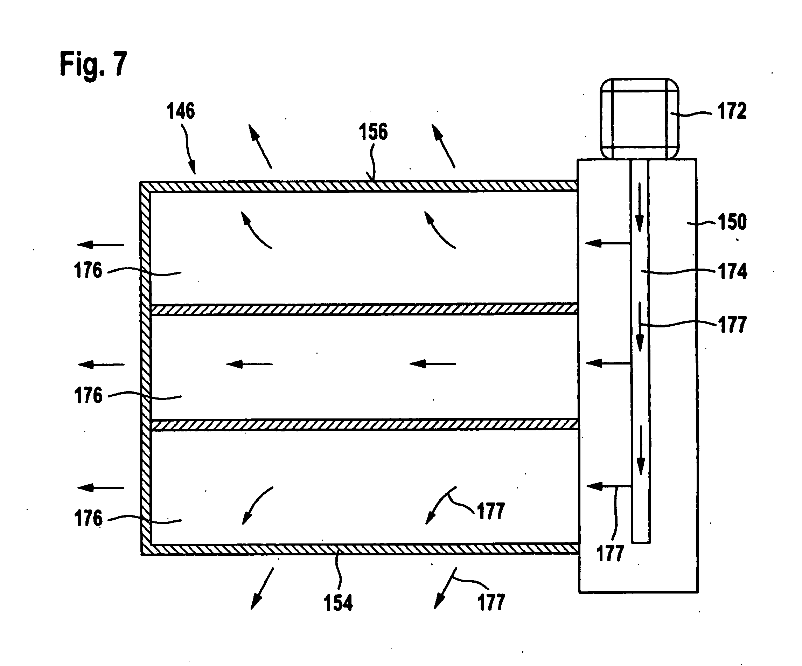

Eines dieser regenerierbaren Oberflächenfilter 146 ist in den Fig. 6 und 7 im Detail dargestellt.

Jedes der regenerierbaren Oberflächenfilter 146 umfasst einen hohl ausgebildeten Grundkörper 150, an welchem mehrere, beispielsweise jeweils vier, Filterelemente 154 gehalten sind.

Die Filterelemente 154 sind beispielsweise im wesentlichen plattenförmig ausgebildet und weisen, wie aus Fig. 6 zu ersehen ist, vorzugsweise einen gezackten Querschnitt auf, um die zur Verfügung stehende Filteroberfläche 156 zu vergrößern.

Die Filterelemente 154 können beispielsweise als Platten aus gesintertem Polyethlyen, die an ihrer Außenfläche mit einer Membran aus Polytetrafluorethylen (PTFE) versehen sind, ausgebildet sein.

Alternativ oder ergänzend hierzu kann auch vorgesehen sein, dass die Filterelemente 154 aus einem Vliesstoff mit einer PTFE-Beschichtung gebildet sind.

Die Beschichtung aus PTFE dient jeweils dazu, die Filterklasse des Oberflächenfilters 146 zu erhöhen (d.h. dessen Durchlässigkeit zu verringern) und ferner das permanente Anhaften des aus dem Abluftstrom 120 abgetrennten Nasslack-Oversprays zu verhindern.

Sowohl das Grundmaterial der Filterelemente 154 als auch deren PTFE-Beschichtung weisen eine Porosität auf, so dass die Abluft durch die Poren in den Innenraum 176 des jeweiligen Filterelements 154 gelangen kann.

Um das Verkleben der Filteroberfläche 156 zu verhindern, ist dieselbe ferner mit einer Sperrschicht aus dem in den Abluftstrom abgegebenen Precoat-Material versehen.

Diese Sperrschicht bildet sich im Betrieb der Vorrichtung 126 einfach durch Abscheidung des in den Abluftstrom 120 abgegebenen Precoat-Materials an der Filteroberfläche 156.

Vorzugsweise wird die Menge des in den Abluftstrom 120 abgegebenen Precoat-Materials so bemessen, dass die Dicke der Sperrschicht aus dem Precoat-Material auf den Filterelementen 154 der regenerierbaren Oberflächenfilter 146 im Bereich von beispielsweise ungefähr 150 µm bis 200 µm liegt.

Der Abluftstrom 120 überstreicht die Filteroberflächen 156 der Filterelemente 154 des regenerierbaren Oberflächenfilters 146, wobei sowohl das mitgeführte Precoat-Material als auch der mitgeführte Nasslack-Overspray an den Filteroberflächen 156 abgeschieden werden, und gelangt durch die porösen Filteroberflächen 156 in die Innenräume 176 der Filterelemente 154, die mit dem Hohlraum innerhalb des Grundkörpers 150 verbunden sind.

Der gereinigte Abluftstrom 120 gelangt somit durch den Grundkörper 150 in den Abluftkanal 160.

Wie aus der schematischen Darstellung der Fig. 5 zu ersehen ist, gelangt die von dem Nasslack-Overspray gereinigte Abluft aus dem Abluftkanal 160 zumindest teilweise zurück zu der Luftstromerzeugungseinrichtung 118, welche die gereinigte Abluft über eine Zuführleitung 162 erneut dem Applikationsbereich 108 in der Lackierkabine 110 zuführt.

Ein anderer Teil des gereinigten Abluftstroms wird über ein Abluftgebläse 164 in einer Abluftleitung 166 an die Umgebung abgegeben.

Dieser an die Umgebung abgegebene Teil des Abluftstroms wird durch Frischluft ersetzt, welche der Luftstromerzeugungseinrichtung 118 über eine Frischluftzuführleitung 168 zugeführt wird.

Der Großteil der durch den Applikationsbereich 108 hindurchgeführten Luft wird somit in einem Umluftkreislauf 170 geführt, welcher die Luftstromerzeugungseinrichtung 118, die Zuführleitung 162, den Applikationsbereich 108, die Strömungskammer 128 und den Abluftkanal 160 umfasst, wodurch eine ständige Aufheizung frisch zugeführter Zuluft vermieden und somit die Energiekosten deutlich gesenkt werden.

Da die Abtrennung des Nasslack-Oversprays aus dem Abluftstrom 120 mittels der regenerierbaren Oberflächenfilter 146 trocken, d.h. ohne Auswaschung mit einer Reinigungsflüssigkeit, erfolgt, wird die im Umluftkreislauf 170 geführte Luft beim Abtrennen des Nasslack-Oversprays nicht befeuchtet, so dass auch keinerlei Vorrichtungen zur Entfeuchtung der im Umluftkreislauf 170 geführten Luft erforderlich sind.

Ferner sind auch keine Vorrichtungen zur Abtrennung von Nasslack-Overspray aus einer Auswasch-Reinigungsflüssigkeit erforderlich.

Die regenerierbaren Oberflächenfilter 146 werden in bestimmten Zeitintervallen, wenn ihre Beladung mit Nasslack-Overspray ein vorgegebenes Maß erreicht hat, durch Druckluftimpulse abgereinigt.

Diese Abreinigung kann beispielsweise einmal pro Arbeitsschicht, d.h. zweimal bis dreimal pro Arbeitstag, erfolgen.

Die erforderlichen Druckluftimpulse werden mittels eines Druckluftspeichers 172 erzeugt, welcher an dem Grundkörper 150 des jeweiligen regenerierbaren Oberflächenfilters 146 angeordnet ist und dazu in der Lage ist, Druckluftimpulse an Druckluftrohre 174 abzugeben, welche innerhalb des jeweiligen Grundkörpers 150 verlaufen und von dem Druckluftspeicher 172 in die Innenräume 176 der Filterelemente 154 führen.

Von den Innenräumen 176 der Filterelemente 154 gelangen die Druckluftimpulse durch die porösen Filteroberflächen 156 in den Außenraum der Filterelemente 154, wobei die an den Filteroberflächen 156 gebildete Sperrschicht aus Precoat-Material und dem daran abgeschiedenen Nasslack-Overspray von den Filteroberflächen 156 abgelöst wird, so dass die Filteroberflächen 156 in ihren abgereinigten Ursprungszustand zurückversetzt werden.

Die Strömungsrichtung der Druckluft durch ein regenerierbares Oberflächenfilter 146 beim Abreinigen ist in Fig. 7 durch die Pfeile 177 dargestellt.

Der Druckluftvorrat in den Druckluftspeichern 172 wird über (nicht dargestellte) Druckluftzuführleitungen aus einem bauseitig vorhandenen Druckluftnetz ergänzt.

Alternativ oder ergänzend zu einer Abreinigung durch Druckluftimpulse kann auch vorgesehen sein, dass die regenerierbaren Oberflächenfilter 146 mittels einer geeigneten Spüleinrichtung in vorgegebenen Intervallen abgespült werden, um den an den Filteroberflächen 156 abgeschiedenen Nasslack-Overspray zu entfernen.

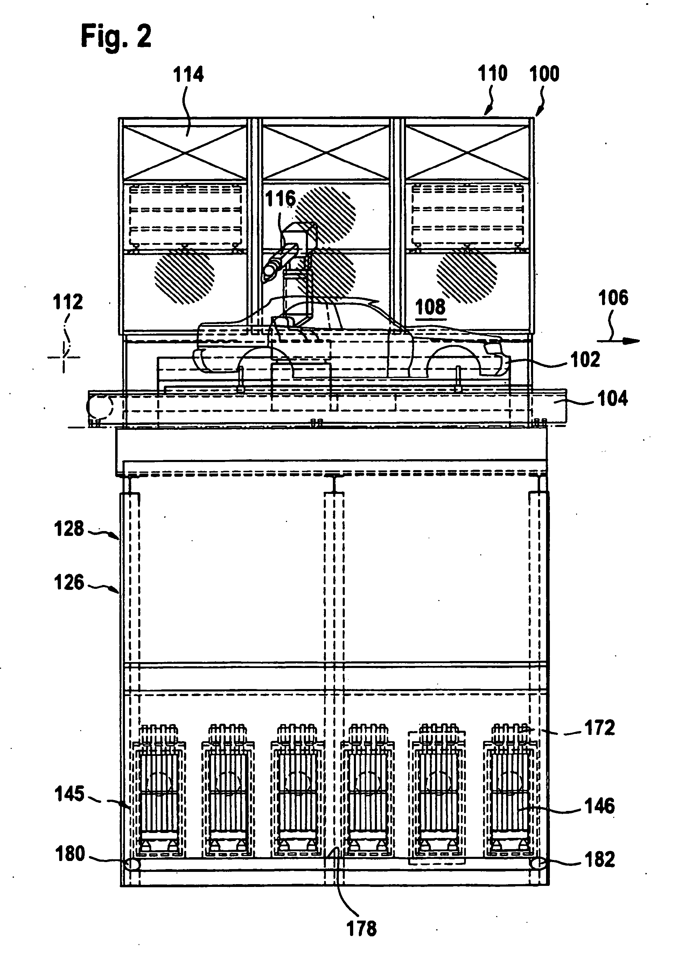

Wie am besten aus den Fig. 1 und 2 zu ersehen ist, gelangt das von den Filteroberflächen 156 der regenerierbaren Oberflächenfilter 146 abgereinigte Material auf ein am Boden der Strömungskammer 128 angeordnetes Sammelband 178, das beispielsweise als ein über eine angetriebene Rolle 180 und eine nicht angetriebene Umlenkrolle 182 umlaufendes, endloses Band ausgebildet ist.

Die angetriebene Rolle 180 wird mittels eines Antriebsmotors 184 in Drehung versetzt, um das Sammelband 178 längs der Förderrichtung 106 in Bewegung zu versetzen.

Auf diese Weise wird mittels des Sammelbandes 178 das von den regenerierbaren Oberflächenfiltern 146 auf die Oberfläche des Sammelbands 178 gelangte Material, welches Precoat-Material und abgeschiedenen Nasslack-Overspray umfasst, zu einer (nicht dargestellten) Abscheidevorrichtung transportiert, von welcher dieses Material (beispielsweise mittels Abstreifern) von dem Sammelband 178 gelöst, gesammelt und gegebenenfalls einer Weiterverwendung zugeführt wird.

Das Sammelband 178 nimmt auch einen Teil des Nasslack-Oversprays auf, welcher direkt aus dem Abluftstrom 120 auf das Sammelband 178 gelangt, bevor der Abluftstrom 120 die regenerierbaren Oberflächenfilter 146 erreicht.

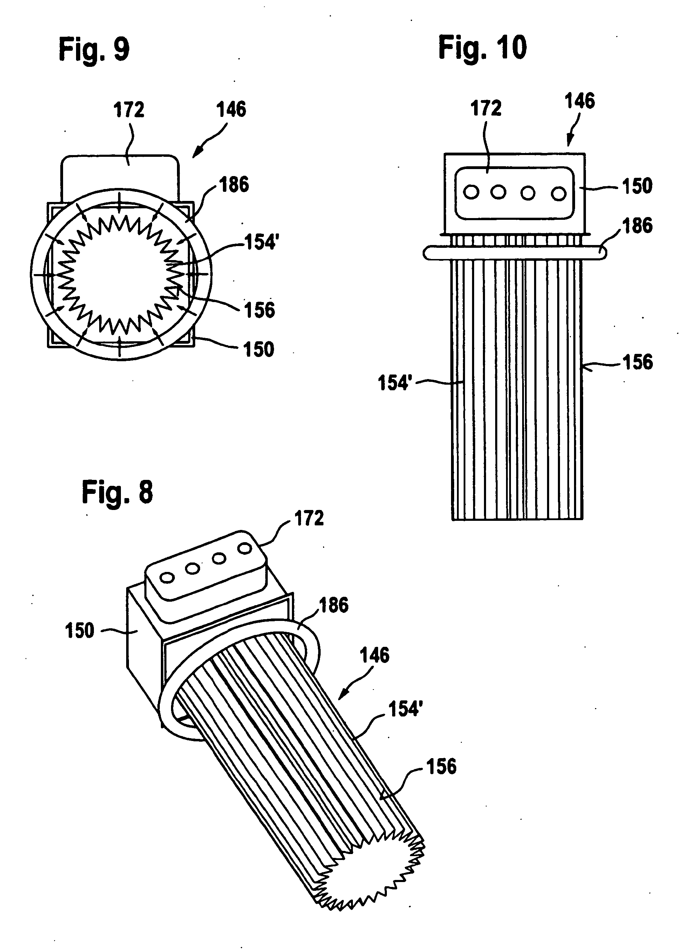

Eine alternative Ausgestaltung der regenerierbaren Oberflächenfilter 146, welche in der Vorrichtung 126 verwendbar sind, ist in den Fig. 8 bis 10 dargestellt.

Das in den Fig. 8 bis 10 dargestellte regenerierbare Oberflächenfilter 146 umfasst statt einer Mehrzahl vertikal ausgerichteter, nebeneinander angeordneter plattenförmiger Filterelemente ein im wesentlichen zylindrisches Filterelement 154', das zur Vergrößerung der zur Verfügung stehenden Filteroberfläche 156 ebenfalls eine im Querschnitt gesehen gezackte Filteroberfläche 156 aufweist.

Zusätzlich zur Erzeugung der Druckluftimpulse ist zur Abreinigung des regenerierbaren Oberflächenfilters 146 bei dieser Ausführungsform eine Spülflüssigkeits-Ringleitung 186 vorgesehen, welche eine Spülflüssigkeit durch an der radialen Innenseite der Spülflüssigkeits-Ringleitung 186 vorgesehene Spülflüssigkeits-Austrittsöffnungen gegen die Filteroberfläche 156 des Filterelements 154' spritzt, so dass die Spülflüssigkeit die Sperrschicht und den daran abgeschiedenen Nasslack-Overspray von der Filteroberfläche 156 ablöst und auf das Sammelband 178 befördert.

Durch die Strömungsumlenkung des Abluftstroms 120 an dem verengten Bereich 140 des Strömungswegs, durch welche die mittlere Strömungsrichtung des Abluftstroms 120 gegenüber der mittleren Strömungsrichtung im Applikationsbereich 108 um ungefähr 90° umgelenkt wird, wird eine besonders starke Verwirbelung des Abluftstroms 120 in dem verengten Bereich 140 erzielt, was dazu beiträgt, dass das von der Precoat-Zuführeinrichtung 144 zugeführte Precoat-Material besonders gut im Abluftstrom 120 verteilt wird.

Außerdem wird dadurch, dass der verengte Bereich 140 als ein im wesentlichen vertikal ausgerichteter Spalt 142 ausgebildet ist, erreicht, dass keine Gegenstände und kein Schmutz in vertikaler Fallinie aus dem Applikationsbereich 108 oder von der Fördervorrichtung 104 in die Strömungskammer 128 gelangen können.

Hierdurch sind insbesondere die regenerierbaren Oberflächenfilter 146 besonders gut geschützt.

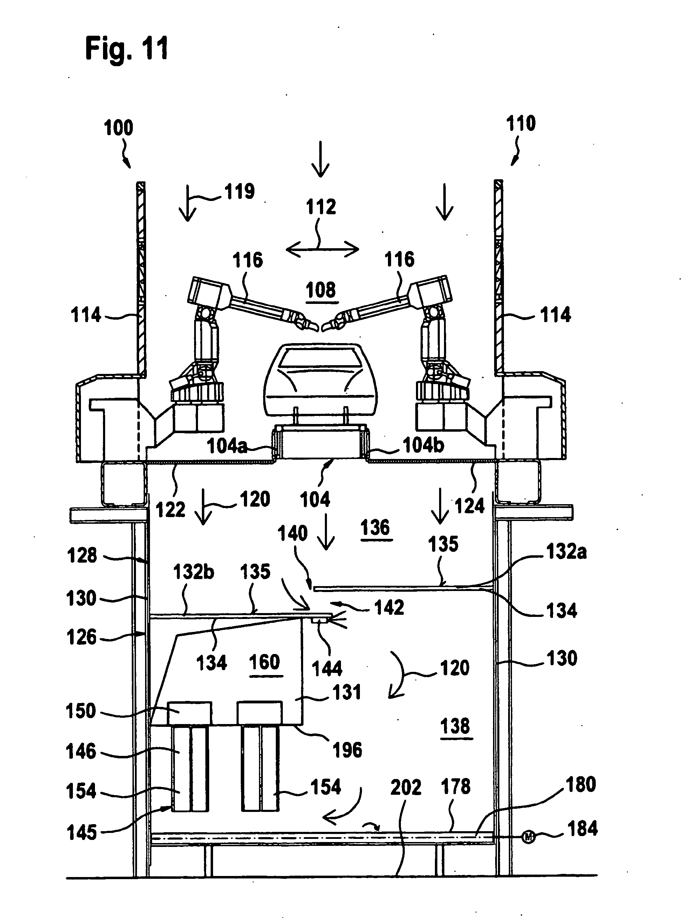

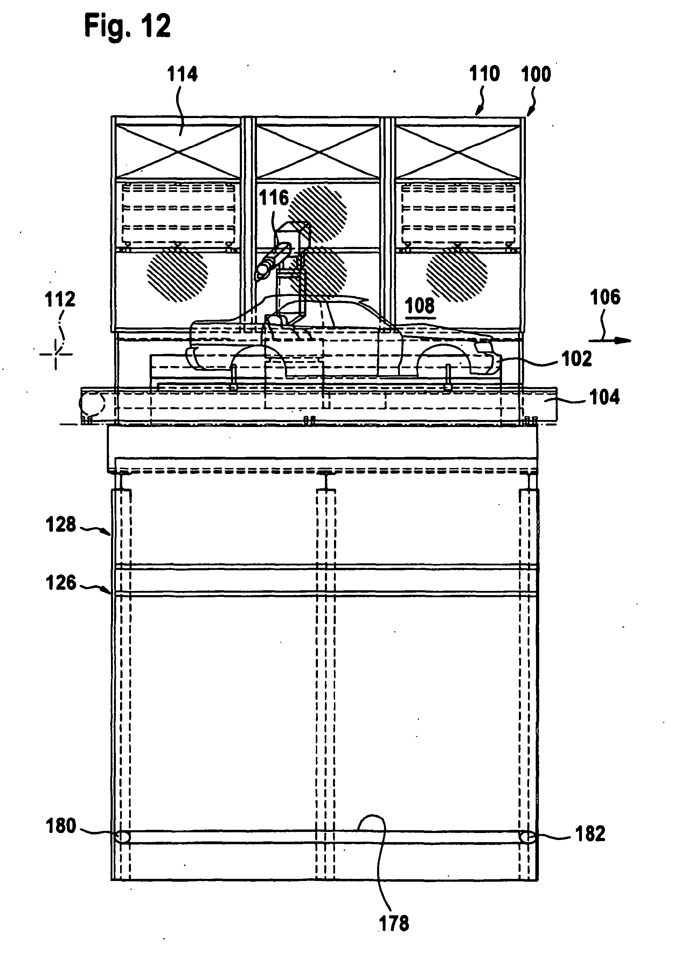

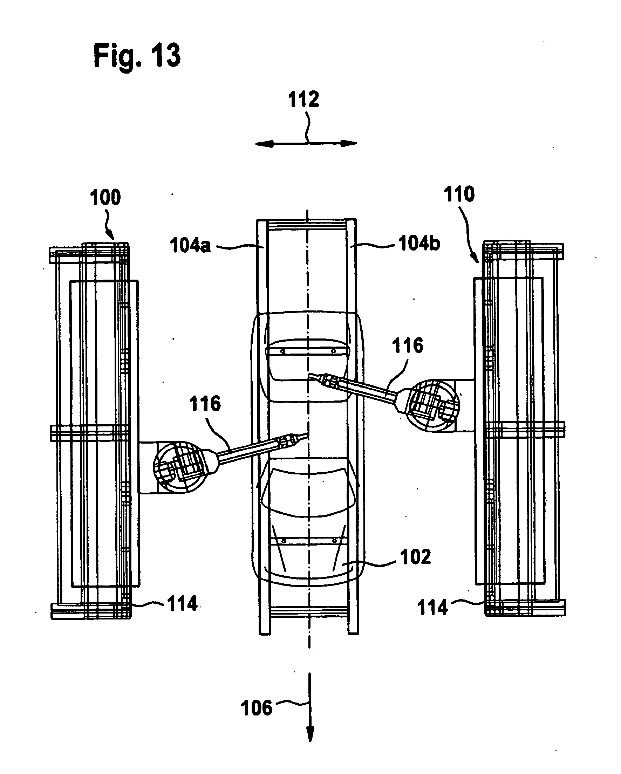

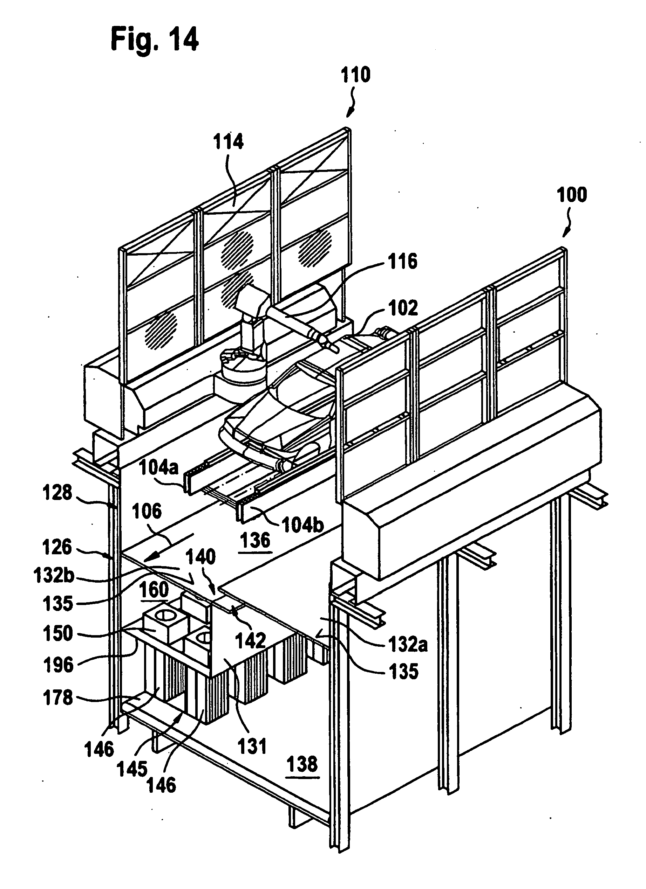

Eine in den Fig. 11 bis 14 dargestellte zweite Ausführungsform einer Anlage 100 zum Spritzlackieren von Fahrzeugkarosserien 102 unterscheidet sich von der vorstehend beschriebenen ersten Ausführungsform dadurch, dass sich der in die Strömungskammer 128 integrierte Abluftkanal 160 nicht bis zum Boden der Strömungskammer 128 erstreckt, sondern vielmehr eine untere Begrenzungswand 196 des Abluftkanals 160 in vertikaler Richtung von dem Boden 202 und von dem Sammelband 178, welches sich bei dieser Ausführungsform über die gesamte Breite der Sammelkammer 128 und der Lackierkabine 110 erstreckt, beabstandet ist.

Die regenerierbaren Oberflächenfilter 146 sind bei dieser Ausführungsform nicht an der vertikalen Seitenwand 131 des Abluftkanals 160, sondern an der unteren Begrenzungswand 196 des Abluftkanals 160 angeordnet, wobei die Filterelemente 154 der regenerierbaren Oberflächenfilter 146 in im wesentlichen vertikaler Richtung von der unteren Begrenzungswand 196 des Abluftkanals 160 in den unteren Abschnitt 138 der Strömungskammer 128 herabhängen, so dass sie zwischen dem Abluftkanal 160 und dem Sammelband 178 angeordnet sind.

Durch diese hängende Anordnung der Filterelemente 154 wird eine besonders effiziente Abreinigung der regenerierbaren Oberflächenfilter 146 erzielt.

Ferner sind bei dieser zweiten Ausführungsform die Strömungsleitelemente 132a, 132b auf einem höheren Niveau, d.h. näher an dem Applikationsbereich 108 der Lackierkabine 110, angeordnet als bei der ersten Ausführungsform.

Im übrigen stimmt die in den Fig. 11 bis 14 dargestellte zweite Ausführungsform hinsichtlich Aufbau und Funktion mit der in den Fig. 1 bis 10 dargestellten ersten Ausführungsform überein, auf deren vorstehende Beschreibung insoweit Bezug genommen wird.

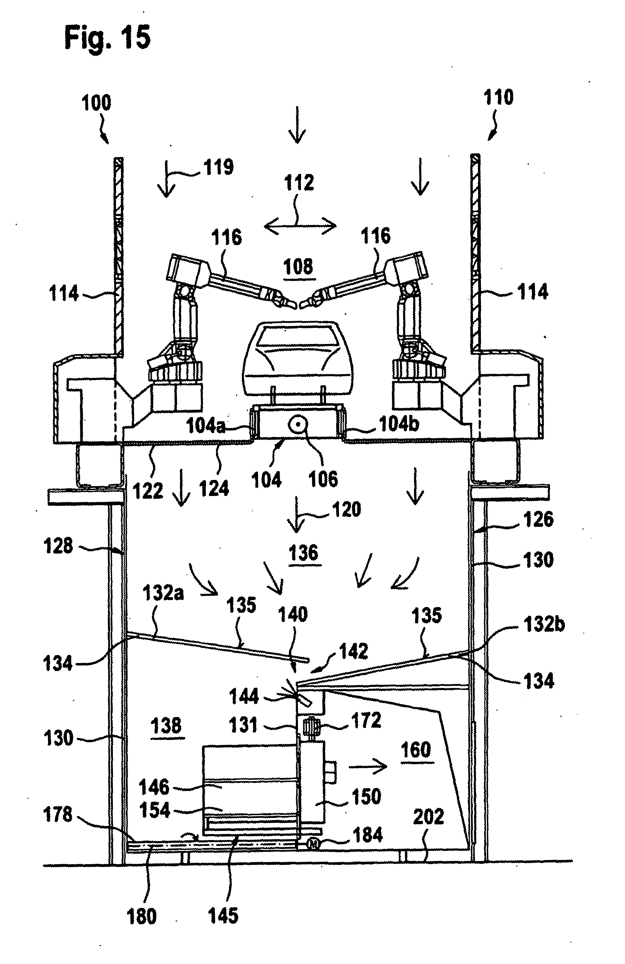

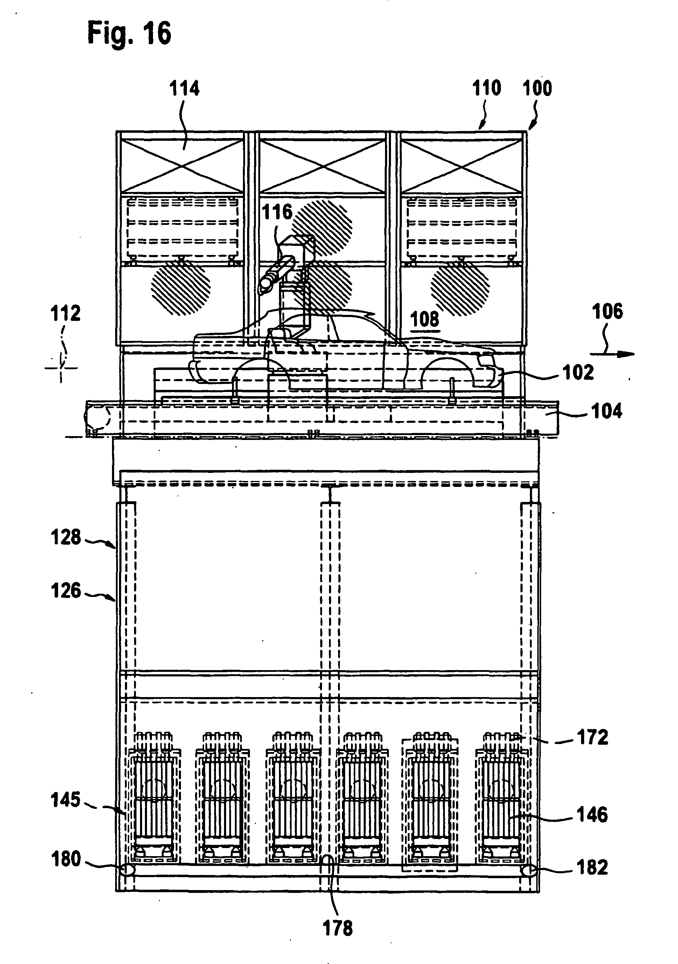

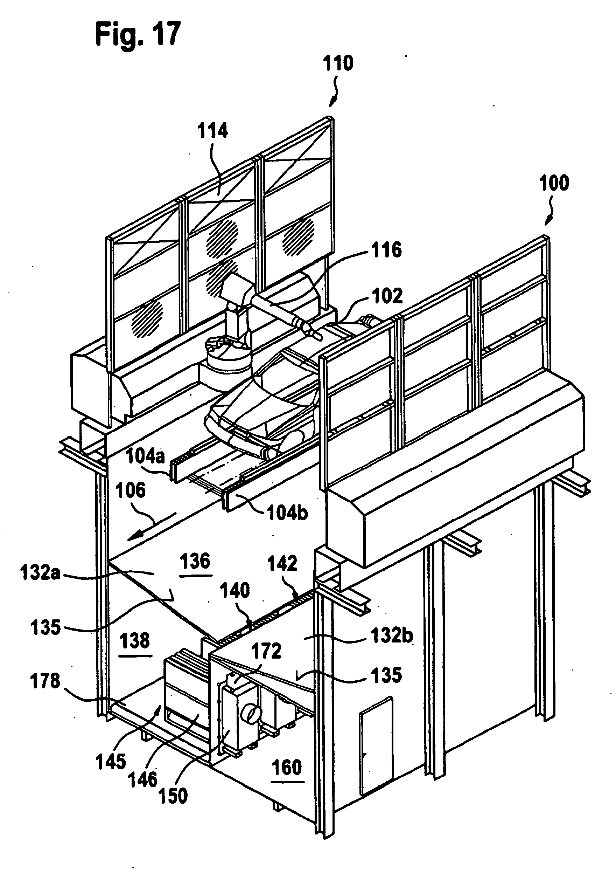

Eine in den Fig. 15 bis 17 dargestellte dritte Ausführungsform einer Anlage 100 zum Lackieren von Fahrzeugkarosserien 102 unterscheidet sich von der in den Fig. 1 bis 10 dargestellten ersten Ausführungsform dadurch, dass die Strömungsleitelemente 132a, 132b, welche den unteren Abschnitt 138 von dem oberen Abschnitt 136 der Strömungskammer 128 der Vorrichtung 126 zum Abtrennen von Nasslack-Overspray trennen, bei dieser dritten Ausführungsform nicht, wie bei der ersten Ausführungsform, im wesentlichen horizontal ausgerichtet sind, sondern, wie am besten aus Fig. 15 zu ersehen ist, so gegen die Horizontale geneigt sind, dass sie zu dem verengten Bereich 140 hin abfallen.

Der Neigungswinkel gegen die Horizontale beträgt vorzugsweise ungefähr 5° bis ungefähr 30°.

Durch diese Neigung der Strömungsleitelemente 132a, 132b und damit der Strömungsleitflächen 135 an deren Oberseite wird eine trichterförmige Gestalt des unteren Bereichs des oberen Abschnitts 136 der Strömungskammer 128 erzielt, durch welche die Luftströmung zu dem verengten Bereich 140 hin vergleichmäßigt wird und das Ausmaß von Verwirbelungen an der Oberseite der Strömungsleitelemente 132a, 132b reduziert wird. Auf diese Weise wird ein geringerer Anteil des Nasslack-Oversprays bereits an den Strömungsleitflächen 135 abgeschieden, bevor der Abluftstrom 120 den unteren Abschnitt 138 der Strömungskammer 128 erreicht.

Bei dieser Ausführungsform ist das untere Strömungsleitelement 132b ferner ein von der oberen Begrenzungswand des Abluftkanals 160 verschiedenes Element.

Im übrigen stimmt die in den Fig. 15 bis 17 dargestellte dritte Ausführungsform hinsichtlich Aufbau und Funktion mit der in den Fig. 1 bis 10 dargestellten ersten Ausführungsform überein, auf deren vorstehende Beschreibung insoweit Bezug genommen wird.

## Patentansprüche

1. Vorrichtung zum Abtrennen von Nasslack-Overspray aus einem Overspray-Partikel enthaltenden Abluftstrom (120), wobei die Overspray-Partikel in einem Applikationsbereich (108) einer Lackieranlage (100) in den Abluftstrom (120) gelangen,
wobei die gesamte Abtrennung des Nasslack-Oversprays aus dem Overspray-Partikel enthaltenden Abluftstrom trocken, das heißt ohne Verwendung einer Flüssigkeit zum Auswaschen der Overspray-Partikel aus dem Abluftstrom, erfolgt,
wobei die Vorrichtung (126) mindestens eine Abtrennvorrichtung (145) zum Abtrennen des Oversprays aus zumindest einem Teil des Abluftstroms (120) umfasst, welche mindestens ein regenerierbares Oberflächenfilter (146) aufweist, und
wobei der Strömungsweg des Abluftstroms (120) von dem Applikationsbereich (108) zu der Abtrennvorrichtung (145) mindestens einen verengten Bereich (140) aufweist, wobei die mittlere Strömungsrichtung des Abluftstroms (120) beim Passieren des verengten Bereiches (140) quer zur Vertikalen ausgerichtet ist,
**dadurch gekennzeichnet,**
**dass** die Vorrichtung (126) zwei Strömungsleitelemente (132a, 132b) mit jeweils einer Strömungsleitfläche (135) umfasst, die zumindest einen Teil des Abluftstroms (120) zu dem verengten Bereich (140) hin leitet, und
**dass** der verengte Bereich (140) die Form eines Spaltes (142) zwischen den einander gegenüberliegenden freien Rändern der Strömungsleitelemente (132a, 132b) aufweist.

2. Vorrichtung nach Anspruch 1, **dadurch gekennzeichnet, dass** die mittlere Strömungsrichtung des Abluftstroms (120) beim Passieren des verengten Bereiches (140) im Wesentlichen horizontal ausgerichtet ist.

3. Vorrichtung nach einem der Ansprüche 1 oder 2, **dadurch gekennzeichnet, dass** der Abluftkanal (160) zumindest teilweise unterhalb des verengten Bereichs (140) angeordnet ist.

4. Vorrichtung nach einem der Ansprüche 1 bis 3, **dadurch gekennzeichnet, dass** die Vorrichtung (126) mindestens einen Abluftkanal (160) umfasst, in welchen zumindest ein Teil des Abluftstroms (120) nach dem Passieren der Abtrennvorrichtung (145) eintritt, und dass mindestens eine Strömungsleitfläche (135) an dem Abluftkanal (160) angeordnet ist.

5. Vorrichtung nach einem der Ansprüche 1 bis 4, **dadurch gekennzeichnet, dass** mindestens eine Strömungsleitfläche (135) zumindest abschnittsweise im Wesentlichen horizontal ausgerichtet ist.

6. Vorrichtung nach einem der Ansprüche 1 bis 5, **dadurch gekennzeichnet, dass** mindestens eine Strömungsleitfläche (135) zumindest abschnittsweise gegen die Horizontale, vorzugsweise zu dem verengten Bereich (140) hin, geneigt ist.

7. Vorrichtung nach einem der Ansprüche 1 bis 6, **dadurch gekennzeichnet, dass** der verengte Bereich (140) unterhalb des Applikationsbereichs (108) angeordnet ist.

8. Vorrichtung nach einem der Ansprüche 1 bis 7, **dadurch gekennzeichnet, dass** der Applikationsbereich (108) in einer Lackierkabine (110) angeordnet ist und der verengte Bereich (140) innerhalb einer vertikalen Projektion der Grundfläche der Lackierkabine (110) angeordnet ist.

9. Vorrichtung nach einem der Ansprüche 1 bis 8, **dadurch gekennzeichnet, dass** die Ausdehnung des verengten Bereichs (140) in der Strömungsrichtung des Abluftstroms (120) kürzer ist als ungefähr 2 m, vorzugsweise kürzer ist als ungefähr 1 m, insbesondere kürzer ist als ungefähr 0,5 m.

10. Vorrichtung nach einem der Ansprüche 1 bis 9, **dadurch gekennzeichnet, dass** der Applikationsbereich (108) in einer Lackierkabine (110) mit einer Längsrichtung (106) angeordnet ist und dass der verengte Bereich (140) sich in der Längsrichtung (106) der Lackierkabine (110) über im Wesentlichen die gesamte Länge der Lackierkabine (110) erstreckt.

11. Vorrichtung nach einem der Ansprüche 1 bis 10, **dadurch gekennzeichnet, dass** der Applikationsbereich (108) in einer Lackierkabine (110) mit einer Längsrichtung (106) angeordnet ist und dass der verengte Bereich (140) in der Längsrichtung (106) der Lackierkabine (110) in mehrere verengte Teil-Bereiche unterteilt ist.

12. Vorrichtung nach einem der Ansprüche 1 bis 10, **dadurch gekennzeichnet, dass** der Applikationsbereich (108) in einer Lackierkabine (110) mit einer Längsrichtung (106) angeordnet ist und dass der verengte Bereich (140) in der Längsrichtung (106) der Lackierkabine (110) nicht unterteilt ist.

13. Vorrichtung nach einem der Ansprüche 1 bis 12, **dadurch gekennzeichnet, dass** der verengte Bereich (140) in vertikaler Richtung in mehrere verengte Teil-Bereiche unterteilt ist.

14. Vorrichtung nach einem der Ansprüche 1 bis 12, **dadurch gekennzeichnet, dass** der verengte Bereich (140) in vertikaler Richtung nicht unterteilt ist.

15. Vorrichtung nach einem der Ansprüche 1 bis 14, **dadurch gekennzeichnet, dass** der Eintritt des Abluftstroms (120) in den verengten Bereich (140) oberhalb des mindestens einen regenerierbaren Oberflächenfilters (146) angeordnet ist.

16. Vorrichtung nach einem der Ansprüche 1 bis 15, **dadurch gekennzeichnet, dass** der Applikationsbereich (108) in einer Lackierkabine angeordnet ist und dass der kleinste von dem Abluftstrom (120) durchströmte Querschnitt des verengten Bereichs (140) höchstens 20 % der Grundfläche der Lackierkabine (110) beträgt.

17. Vorrichtung nach einem der Ansprüche 1 bis 16, **dadurch gekennzeichnet, dass** vertikal über dem mindestens einen regenerierbaren Oberflächenfilter (146) mindestens ein Abschirmelement (132a) angeordnet ist, das ein senkrechtes Herabfallen von Gegenständen, Schmutz und/oder Lackpartikeln aus dem Applikationsbereich (108) auf das regenerierbare Oberflächenfilter (146) verhindert .

18. Vorrichtung nach Anspruch 17, **dadurch gekennzeichnet, dass** mindestens ein Abschirmelement (132) eine Begrenzung des verengten Bereiches (140) des Strömungswegs des Abluftstroms (120) bildet.

19. Vorrichtung nach einem der Ansprüche 17 oder 18, **dadurch gekennzeichnet, dass** die Vorrichtung (126) mindestens einen Abluftkanal (160) umfasst, in weichen zumindest ein Teil des Abluftstroms (120) nach dem Passieren der Abtrennvorrichtung (145) eintritt, und dass der Abluftkanal (160) vertikal über der Abtrennvorrichtung (145) angeordnet ist.

20. Vorrichtung nach einem der Ansprüche 1 bis 19, **dadurch gekennzeichnet, dass** die Vorrichtung (126) mindestens einen Abluftkanal (160) umfasst, in welchen zumindest ein Teil des Abluftstroms (120) nach dem Passieren der Abtrennvorrichtung (145) eintritt, dass die Vorrichtung (126) einen Boden (202) aufweist, welcher den Strömungsweg des Abluftstroms (120) nach unten hin begrenzt, und dass zumindest ein Teil des Bodens (202) von dem Abluftkanal (160) abgedeckt ist.

21. Vorrichtung nach einem der Ansprüche 1 bis 20, **dadurch gekennzeichnet, dass** der Applikationsbereich (108) in einer Lackierkabine (110) angeordnet ist, dass die Vorrichtung (126) mindestens einen Abluftkanal (160) umfasst, in weichen zumindest ein Teil des Abluftstroms (120) nach dem Passieren der Abtrennvorrichtung (145) eintritt, und dass der Abluftkanal (160) innerhalb einer vertikalen Projektion der Grundfläche der Lackierkabine (110) angeordnet ist.

22. Vorrichtung nach einem der Ansprüche 1 bis 21, **dadurch gekennzeichnet, dass** das mindestens eine regenerierbare Oberflächenfilter (146) eine ein Precoat-Material umfassende Sperrschicht aufweist, welche ein Verkleben der Filteroberfläche (156) verhindert.

23. Vorrichtung nach Anspruch 22, **dadurch gekennzeichnet, dass** die Vorrichtung (126) mindestens eine Precoat-Zuführeinrichtung (144) umfasst, welche ein Precoat-Material in den Abluftstrom (120) abgibt.

24. Vorrichtung nach Anspruch 23, **dadurch gekennzeichnet, dass** die Abgabe von Precoat-Material in den Abluftstrom (120) kontinuierlich erfolgt.

25. Vorrichtung nach Anspruch 23, **dadurch gekennzeichnet, dass** die Abgabe von Precoat-Material in den Abluftstrom (120) intervallweise erfolgt.

26. Vorrichtung nach einem der Ansprüche 23 bis 25, **dadurch gekennzeichnet, dass** die mindestens eine Precoat-Zuführeinrichtung (144) an dem verengten Bereich (140) des Strömungswegs des Abluftstroms (120) angeordnet ist.

27. Vorrichtung nach einem der Ansprüche 1 bis 26, **dadurch gekennzeichnet, dass** das mindestens eine regenerierbare Oberflächenfilter (146) intervallweise abreinigbar ist.

28. Vorrichtung nach einem der Ansprüche 1 bis 27, **dadurch gekennzeichnet, dass** das mindestens eine regenerierbare Oberflächenfilter (146) im Betrieb der Vorrichtung (126) eine feuchte Oberfläche aufweist.

29. Vorrichtung nach Anspruch 28, **dadurch gekennzeichnet, dass** die Oberfläche des mindestens einen regenerierbaren Oberflächenfilters (146) kontinuierlich oder intervallweise abspülbar ist.

30. Vorrichtung nach einem der Ansprüche 1 bis 29, **dadurch gekennzeichnet, dass** das mindestens eine regenerierbare Oberflächenfilter (146) durch Druckluftimpulse abreinigbar ist.

31. Vorrichtung nach einem der Ansprüche 1 bis 30, **dadurch gekennzeichnet, dass** die Vorrichtung (126) einen Umluftkreislauf (170) aufweist, in welchem der Abluftstrom (120), aus welchem der Nasslack-Overspray abgetrennt worden ist, zumindest teilweise erneut dem Applikationsbereich (108) zugeführt wird.

32. Anlage zum Lackieren von Gegenständen, insbesondere von Fahrzeugkarosserien (102), umfassend mindestens eine Lackierkabine (110) und mindestens eine Vorrichtung (126) zum Abtrennen von Nasslack-Overspray aus einem Overspray-Partikel enthaltenden Abluftstrom (120) nach einem der Ansprüche 1 bis 31.

## Claims

1. Apparatus for separating wet paint overspray from an outlet air stream (120) containing overspray particles,
wherein the overspray particles pass into the outlet air stream (120) in an application region (108) of a paint shop (100),
wherein the entire separation of the wet paint overspray from the outlet air stream containing overspray particles is a dry process, i.e. without the use of a liquid to wash the overspray particles out of the outlet air stream,
wherein the apparatus (126) comprises at least one separating apparatus (145) for separating the overspray from at least some of the outlet air stream (120), which separating apparatus (145) comprises at least one regenerable surface filter (146), and
wherein the flow path of the outlet air stream (120) from the application region (108) to the separating apparatus (145) has at least one narrowed region (140),
wherein the mean flow direction of the outlet air stream (120) during passage through the narrowed region (140) is oriented transversely of the vertical,
**characterized in**
**that** the apparatus (126) comprises two flow-directing elements (132a, 132b) each having a flow-directing face (135) that directs at least some of the outlet air stream (120) towards the narrowed region (140), and that the narrowed region (140) takes the form of a gap (142) between the mutually opposing free edges of the flow-directing elements (132a, 132b).

2. Apparatus according to claim 1, **characterized in that** the mean flow direction of the outlet air stream (120) during passage through the narrowed region (140) is oriented substantially horizontally.

3. Apparatus according to one of claims 1 or 2, **characterized in that** the outlet air channel (160) is disposed at least partially below the narrowed region (140).

4. Apparatus according to one of claims 1 to 3, **characterized in that** the apparatus (126) comprises at least one outlet air channel (160), into which at least some of the outlet air stream (120) enters after passing through the separating apparatus (145), and that at least one flow-directing face (135) is disposed at the outlet air channel (160).

5. Apparatus according to one of claims 1 to 4, **characterized in that** at least one flow-directing face (135) is at least in sections oriented substantially horizontally.

6. Apparatus according to one of claims 1 to 5, **characterized in that** at least one flow-directing face (135) is at least in sections inclined relative to the horizontal, preferably in the direction of the narrowed region (140).

7. Apparatus according to one of claims 1 to 6, **characterized in that** the narrowed region (140) is disposed below the application region (108).

8. Apparatus according to one of claims 1 to 7, **characterized in that** the application region (108) is disposed in a paint booth (110) and the narrowed region (140) is disposed within a vertical projection of the base of the paint booth (110).

9. Apparatus according to one of claims 1 to 8, **characterized in that** the extent of the narrowed region (140) in the flow direction of the outlet air stream (120) is shorter than approximately 2 m, preferably shorter than approximately 1 m, in particular shorter than approximately 0.5 m.

10. Apparatus according to one of claims 1 to 9, **characterized in that** the application region (108) is disposed in a paint booth (110) having a longitudinal direction (106) and that the narrowed region (140) extends in the longitudinal direction (106) of the paint booth (110) over substantially the entire length of the paint booth (110).

11. Apparatus according to one of claims 1 to 10, **characterized in that** the application region (108) is disposed in a paint booth (110) having a longitudinal direction (106) and that the narrowed region (140) is subdivided in the longitudinal direction (106) of the paint booth (110) into a plurality of narrowed sub-regions.

12. Apparatus according to one of claims 1 to 10, **characterized in that** the application region (108) is disposed in a paint booth (110) having a longitudinal direction (106) and that the narrowed region (140) is not subdivided in the longitudinal direction (106) of the paint both (110).

13. Apparatus according to one of claims 1 to 12, **characterized in that** the narrowed region (140) is subdivided in vertical direction into a plurality of narrowed sub-regions.

14. Apparatus according to one of claims 1 to 12, **characterized in that** the narrowed region (140) is not subdivided in vertical direction.

15. Apparatus according to one of claims 1 to 14, **characterized in that** the entry of the outlet air stream (120) into the narrowed region (140) is disposed above the at least one regenerable surface filter (146).

16. Apparatus according to one of claims 1 to 15, **characterized in that** the application region (108) is disposed in a paint booth and that the smallest cross section of the narrowed region (140), through which the outlet air stream (120) flows, is at most 20% of the base of the paint booth (110).

17. Apparatus according to one of claims 1 to 16, **characterized in that** disposed vertically above the at least one regenerable surface filter (146) is at least one shielding element (132a) that prevents articles, dirt and/or paint particles from dropping down vertically from the application region (108) onto the regenerable surface filter (146).

18. Apparatus according to claim 17, **characterized in that** at least one shielding element (132) forms a boundary of the narrowed region (140) of the flow path of the outlet air stream (120).

19. Apparatus according to one of claims 17 or 18, **characterized in that** the apparatus (126) comprises at least one outlet air channel (160), into which at least some of the outlet air stream (120) enters after passing through the separating apparatus (145), and that the outlet air channel (160) is disposed vertically above the separating apparatus (145).

20. Apparatus according to one of claims 1 to 19, **characterized in that** the apparatus (126) comprises at least one outlet air channel (160), into which at least some of the outlet air stream (120) enters after passing through the separating apparatus (145), that the apparatus (126) has a base (202), which delimits the flow path of the outlet air stream (120) in a downward direction, and that at least part of the base (202) is covered by the outlet air channel (160).

21. Apparatus according to one of claims 1 to 20, **characterized in that** the application region (108) is disposed in a paint booth (110), that the apparatus (126) comprises at least one outlet air channel (160), into which at least some of the outlet air stream (120) enters after passing through the separating apparatus (145), and that the outlet air channel (160) is disposed within a vertical projection of the base of the paint booth (110).

22. Apparatus according to one of claims 1 to 21, **characterized in that** the at least one regenerable surface filter (146) has a barrier layer, which comprises a precoat material and prevents clogging of the filter surface (156).

23. Apparatus according to claim 22, **characterized in that** the apparatus (126) comprises at least one precoat feed device (144), which releases a precoat material into the outlet air stream (120).

24. Apparatus according to claim 23, **characterized in that** the release of precoat material into the outlet air stream (120) is effected continuously.

25. Apparatus according to claim 23, **characterized in that** the release of precoat material into the outlet air stream (120) is effected periodically.

26. Apparatus according to claims 23 to 25, **characterized in that** the at least one precoat feed device (144) is disposed at the narrowed region (140) of the flow path of the outlet air stream (120).

27. Apparatus according to one of claims 1 to 26, **characterized in that** the at least one regenerable surface filter (146) is cleanable periodically.

28. Apparatus according to one of claims 1 to 27, **characterized in that** the at least one regenerable surface filter (146) has a moist surface during operation of the apparatus (126).

29. Apparatus according to claim 28, **characterized in that** the surface of the at least one regenerable surface filter (146) can be rinsed continuously or periodically.

30. Apparatus according to one of claims 1 to 29, **characterized in that** the at least one regenerable surface filter (146) can be cleaned by means of compressed air pulses.

31. Apparatus according to one of claims 1 to 30, **characterized in that** the apparatus (126) comprises a circulating air circuit (170), in which the outlet air stream (120), from which the wet paint overspray has been separated, is at least partially fed back to the application region (108).

32. Installation for painting articles, in particular vehicle bodies (102), comprising at least one paint booth (110) and at least one apparatus (126) for separating wet paint overspray from an outlet air stream (120) containing overspray particles according to one of claims 1 to 31.

## Revendications

1. Dispositif de séparation de l'excédent de peinture liquide d'un courant d'évacuation d'air (120) contenant des particules d'excédent de peinture, dans lequel les particules d'excédent de peinture parviennent dans une zone d'application (108) d'une installation d'application de peinture (100) dans le courant d'évacuation d'air (120),
dans lequel l'entière séparation de l'excédent de peinture liquide du courant d'évacuation d'air contenant des particules d'excédent de peinture est effectuée à sec, c'est-à-dire sans utiliser un liquide pour enlever par lavage les particules d'excédent de peinture du courant d'évacuation d'air,
dans lequel le dispositif (126) comporte au moins un dispositif de séparation (145) pour la séparation de l'excédent de peinture d'au moins une partie du courant d'évacuation d'air (120), lequel présente au moins un filtre de surface (146) pouvant être régénéré, et
dans lequel la voie d'écoulement du courant d'évacuation d'air (120) de la zone d'application (108) au dispositif de séparation (145) présente au moins une zone rétrécie (140), le sens d'écoulement moyen du courant d'évacuation d'air (120) étant orienté lors du passage de la zone rétrécie (140) transversalement à la verticale,
**caractérisé en ce**
**que** le dispositif (126) comporte deux éléments conducteurs d'écoulement (132a, 132b) avec respectivement une surface conductrice d'écoulement (135) qui conduit au moins une partie du courant d'évacuation d'air (120) vers la zone rétrécie (140) et en ce que la zone rétrécie (140) présente la forme d'une fente (142) entre les bords libres opposés des éléments conducteurs d'écoulement (132a, 132b).

2. Dispositif selon la revendication 1, **caractérisé en ce que** le sens d'écoulement moyen du courant d'évacuation d'air (120) est orienté essentiellement horizontalement lors du passage de la zone rétrécie (140).

3. Dispositif selon l'une quelconque des revendications 1 ou 2, **caractérisé en ce que** le canal d'évacuation d'air (160) est disposé au moins partiellement au-dessous de la zone rétrécie (140).

4. Dispositif selon l'une quelconque des revendications 1 à 3, **caractérisé en ce que** le dispositif (126) comporte au moins un canal d'évacuation d'air (160), dans lequel au moins une partie du courant d'évacuation d'air (120) arrive après le passage du dispositif de séparation (145), et **en ce qu'**au moins une surface conductrice d'écoulement (135) est disposée sur le canal d'évacuation d'air (160).

5. Dispositif selon l'une quelconque des revendications 1 à 4, **caractérisé en ce qu'**au moins une surface conductrice d'écoulement (135) est orientée au moins par endroits essentiellement horizontalement.

6. Dispositif selon l'une quelconque des revendications 1 à 5, **caractérisé en ce qu'**au moins une surface conductrice d'écoulement (135) est inclinée au moins par endroits vers l'horizontale, de préférence vers la zone rétrécie (140).

7. Dispositif selon l'une quelconque des revendications 1 à 6, **caractérisé en ce que** la zone rétrécie (140) est disposée au-dessous de la zone d'application (108).

8. Dispositif selon l'une quelconque des revendications 1 à 7, **caractérisé en ce que** la zone d'application (108) est disposée dans une cabine d'application de peinture (110) et la zone rétrécie (140) est disposée dans une projection verticale de la surface de la cabine d'application de peinture (110).

9. Dispositif selon l'une quelconque des revendications 1 à 8, **caractérisé en ce que** l'extension de la zone rétrécie (140) dans le sens d'écoulement du courant d'évacuation d'air (120) est inférieure à peu près à 2 m, de préférence inférieure à peu près à 1 m, en particulier inférieure à peu près à 0,5 m.

10. Dispositif selon l'une quelconque des revendications 1 à 9, **caractérisé en ce que** la zone d'application (108) est disposée dans une cabine d'application de peinture (110) avec une direction longitudinale (106) et **en ce que** la zone rétrécie (140) s'étend dans la direction longitudinale (106) de la cabine d'application de peinture (110) sur essentiellement toute la longueur de la cabine d'application de peinture (110).

11. Dispositif selon l'une quelconque des revendications 1 à 10, **caractérisé en ce que** la zone d'application (108) est disposée dans une cabine d'application de peinture (110) avec une direction longitudinale (106) et **en ce que** la zone rétrécie (140) dans la direction longitudinale (106) de la cabine d'application de peinture (110) est divisée en plusieurs zones partielles rétrécies.

12. Dispositif selon l'une quelconque des revendications 1 à 10, **caractérisé en ce que** la zone d'application (108) est disposée dans une cabine d'application de peinture (110) avec une direction longitudinale (106) et **en ce que** la zone rétrécie (140) dans la direction longitudinale (106) de la cabine d'application de peinture (110) n'est pas divisée.

13. Dispositif selon l'une quelconque des revendications 1 à 12, **caractérisé en ce que** la zone rétrécie (140) est divisée dans la direction verticale en plusieurs zones partielles rétrécies.

14. Dispositif selon l'une quelconque des revendications 1 à 12, **caractérisé en ce que** la zone rétrécie (140) dans la direction verticale n'est pas divisée.

15. Dispositif selon l'une quelconque des revendications 1 à 14, **caractérisé en ce que** l'arrivée du courant d'évacuation d'air (120) dans la zone rétrécie (140) est disposée au-dessus de l'au moins un filtre de surface (146) pouvant être régénéré.

16. Dispositif selon l'une quelconque des revendications 1 à 15, **caractérisé en ce que** la zone d'application (108) est disposée dans une cabine d'application de peinture et **en ce que** la plus petite section transversale parcourue par le courant d'évacuation d'air (120) de la zone rétrécie (140) s'élève au maximum à 20 % de l'aire de la cabine d'application de peinture (110).

17. Dispositif selon l'une quelconque des revendications 1 à 16, **caractérisé en ce qu'**au moins un élément de protection (132a) est disposé verticalement au-dessus de l'au moins un filtre de surface (146) pouvant être régénéré, lequel empêche une chute verticale d'objets, de salissure et/ou de particules de peinture de la zone d'application (108) sur le filtre de surface (146) pouvant être régénéré.

18. Dispositif selon la revendication 17, **caractérisé en ce qu'**au moins un élément de protection (132) forme une délimitation de la zone rétrécie (140) de la voie d'écoulement du courant d'évacuation d'air (120).

19. Dispositif selon l'une quelconque des revendications 17 ou 18, **caractérisé en ce que** le dispositif (126) comporte au moins un canal d'évacuation d'air (160), dans lequel au moins une partie du courant d'évacuation d'air (120) arrive après le passage du dispositif de séparation (145) et **en ce que** le canal d'évacuation d'air (160) est disposé verticalement au-dessus du dispositif de séparation (145).

20. Dispositif selon l'une quelconque des revendications 1 à 19, **caractérisé en ce que** le dispositif (126) comporte au moins un canal d'évacuation d'air (160), dans lequel au moins une partie du courant d'évacuation d'air (120) arrive après le passage du dispositif de séparation (145), **en ce que** le dispositif (126) présente un fond (202) qui délimite la voie d'écoulement du courant d'évacuation d'air (120) vers le bas, et **en ce qu'**au moins une partie du fond (202) est recouverte par le canal d'évacuation d'air (160).

21. Dispositif selon l'une quelconque des revendications 1 à 20, **caractérisé en ce que** la zone d'application (108) est disposée dans une cabine d'application de peinture (110), **en ce que** le dispositif (126) comporte au moins un canal d'évacuation d'air (160), dans lequel au moins une partie du courant d'évacuation d'air (120) arrive après le passage du dispositif de séparation (145) et **en ce que** le canal d'évacuation d'air (160) est disposé dans une projection verticale de la surface de la cabine d'application de peinture (110).

22. Dispositif selon l'une quelconque des revendications 1 à 21, **caractérisé en ce que** l'au moins un filtre de surface (146) pouvant être régénéré présente une couche d'arrêt comportant un matériau de sous-couche qui empêche un collage de la surface de filtre (156).

23. Dispositif selon la revendication 22, **caractérisé en ce que** le dispositif (126) comporte au moins un dispositif d'amenée de sous-couche (144) qui fournit un matériau de sous-couche dans le courant d'évacuation d'air (120).

24. Dispositif selon la revendication 23, **caractérisé en ce que** la fourniture de matériau de sous-couche dans le courant d'évacuation d'air (120) est effectuée en continu.

25. Dispositif selon la revendication 23, **caractérisé en ce que** la fourniture de matériau de sous-couche dans le courant d'évacuation d'air (120) est effectuée par intervalles.

26. Dispositif selon l'une quelconque des revendications 23 à 25, **caractérisé en ce que** l'au moins un dispositif d'amenée de sous-couche (144) est disposé sur la zone rétrécie (140) de la voie d'écoulement du courant d'évacuation d'air (120).

27. Dispositif selon l'une quelconque des revendications 1 à 26, **caractérisé en ce que** l'au moins un filtre de surface (146) pouvant être régénéré peut être nettoyé par intervalles.

28. Dispositif selon l'une quelconque des revendications 1 à 27, **caractérisé en ce que** l'au moins un filtre de surface (146) pouvant être régénéré présente en fonctionnement du dispositif (126) une surface humide.

29. Dispositif selon la revendication 28, **caractérisé en ce que** la surface de l'au moins un filtre de surface (146) pouvant être régénéré peut être rincée en continu ou par intervalles.

30. Dispositif selon l'une quelconque des revendications 1 à 29, **caractérisé en ce que** l'au moins un filtre de surface (146) pouvant être régénéré peut être nettoyé par des impulsions d'air comprimé.

31. Dispositif selon l'une quelconque des revendications 1 à 30, **caractérisé en ce que** le dispositif (126) présente un circuit de circulation d'air (170), dans lequel le courant d'évacuation d'air (120) duquel l'excédent de peinture liquide a été séparé, est amené au moins en partie de nouveau à la zone d'application (108).

32. Installation d'application de peinture d'objets, en particulier de carrosseries de véhicule (102), comportant au moins une cabine d'application de peinture (110) et au moins un dispositif (126) pour la séparation de l'excédent de peinture liquide d'un courant d'évacuation d'air (120) contenant des particules d'excédent de peinture selon l'une quelconque des revendications 1 à 31.
